# EUROPÄISCHE PATENTSCHRIFT

(11) **EP 2 282 844 B1**
(45) Veröffentlichungstag und Bekanntmachung des Hinweises auf die Patenterteilung: **24.04.2013**
(21) Anmeldenummer: 09753533.0
(22) Anmeldetag: 26.05.2009
(51) Int. Cl.: B05B 15/04, C23C 24/04

(54) **ABDECKVORRICHTUNG UND VERFAHREN ZUM BESCHICHTEN VON BAUTEILEN**
COVERING DEVICE AND METHOD FOR COATING COMPONENTS
CACHE ET PROCÉDÉ DE REVÊTEMENT DE COMPOSANTS

(30) Priorität: 28.05.2008 DE 102008025510
(43) Veröffentlichungstag der Anmeldung: 16.02.2011
(73) Patentinhaber: MTU Aero Engines GmbH, 80995 München (DE)
(72) Erfinder: JAKIMOV, Andreas, 81245 München (DE); SCHNEIDERBANGER, Stefan, 85232 Lauterbach (DE); HERTTER, Manuel, 81247 München (DE)
(86) Internationale Anmeldenummer: PCT/DE2009/000720
(87) Internationale Veröffentlichungsnummer: WO 2009/143817

(56) Entgegenhaltungen:
- EP-A- 0 927 773
- EP-A- 1 762 303
- GB-A- 1 526 531
- US-A- 5 090 354

## Beschreibung

Die Erfindung betrifft eine Abdeckvorrichtung für das Beschichten von Bauteilen über Kalt-Kinetisches-Kompaktieren nach dem Oberbegriff des Anspruchs 1 und ein Verfahren zum Beschichten von Bauteilen über Kalt-Kinetisches-Kompaktieren nach dem Oberbegriff des Anspruchs 8.

Aus der Praxis ist es bereits bekannt, Bauteile einer Turbomaschine durch Kalt-Kinetisches-Kompaktieren bzw. kinetisches Kaltgasspritzen zu Beschichten, wobei hierbei eine Beschichtung dadurch auf ein zu beschichtendes Bauteil aufgebracht wird, das Partikel eines Beschichtungswerkstoffs mit Hilfe eines Trägergases auf eine zu beschichtende Oberfläche des zu beschichtenden Bauteils gerichtet werden. Hierbei wird stets eine flächige Beschichtung der zu beschichtenden Oberfläche des Bauteils vorgenommen.

Dann, wenn ein Bauteil nur abschnittsweise beschichtet werden soll, wenn also ein Bereich der Oberfläche des zu beschichtenden Bauteils beschichtet und ein anderer Bereich der Oberfläche des zu beschichtenden Bauteils nicht beschichtet werden soll, muss der nicht zu beschichtende Bereich der Oberfläche des zu beschichtenden Bauteils mit Hilfe einer Abdeckvorrichtung abgedeckt werden. Für Beschichtungsverfahren wie das thermische Spritzen sind bereits Abdeckvorrichtungen bekannt, mit Hilfe derer nicht zu beschichtende Bereiche der Oberfläche abgedeckt werden können. Diese aus dem Stand der Technik für das thermische Spritzen bekannten Abdeckvorrichtungen eignen sich jedoch nicht für den Einsatz beim Beschichten von Bauteilen über Kalt-Kinetisches-Kompaktieren. So würden die aus der Praxis bekannten Abdeckvorrichtungen selbst beschichtet und müssten nach dem Beschichtungsvorgang entsorgt werden.

Hiervon ausgehend liegt der vorliegenden Erfindung das Problem zu Grunde, eine neuartige Abdeckvorrichtung für das Beschichten von Bauteilen über Kalt-Kinetisches-Kompaktieren bzw. kinetisches Kaltgasspritzen und ein Verfahren zum Beschichten von Bauteilen zu schaffen.

Dieses Problem wird durch eine Abdeckvorrichtung nach Anspruch 1 gelöst. Erfindungsgemäß ist dieselbe derart profiliert, dass Abschnitte der Abdeckvorrichtung mit dem von derselben abzudeckenden und damit dem nicht zu beschichtenden Bereich der Oberfläche einen derart spitzen Winkel einschließen, dass Partikel eines Beschichtungswerkstoffs fürKalt-Kinetisches Kompaktieren bew. Kinetisches Kaltgasspritzen während der Beschichtung von den Abschnitten abgelenkt werden , sodass die Partikel an der Abdeckvorrichtung nicht anhaften.

Die erfindungsgemäße Abdeckvorrichtung eignet sich besonderes für das bereichsweise Beschichten von Bauteilen über Kalt-Kinetisches-Kompaktieren bzw. kinetisches Kaltgasspritzen. So besteht bei der erfindungsgemäßen Abdeckvorrichtung nicht die Gefahr, dass dieselbe vom Beschichtungswerkstoff selbst beschichtet wird. So ist es möglich, die erfindungsgemäße Abdeckvorrichtung unbegrenzt häufig zu verwenden. Hierdurch ist ein wirtschaftliches, abschnittsweises Beschichten von Bauteilen über Kalt-Kinetisches-Kompaktieren möglich. Wie bereits ausgeführt, können konturgenau angepasste Abdeckvorrichtungen mehrfach verwendet werden.

Das erfindungsgemäße Verfahren ist in Anspruch 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine erste Ausführungsform einer erfindungsgemäßen Abdeckvorrichtung für das Beschichten von Bauteilen über Kalt-Kinetisches-Kompaktieren bzw. kinetisches Kaltgasspritzen; und
- Fig. 2: eine zweite Ausführungsform einer erfindungsgemäßen Abdeckvorrichtung für das Beschichten von Bauteilen über Kalt-Kinetisches-Kompaktieren bzw. kinetisches Kaltgasspritzen.

Die hier vorliegende Erfindung betrifft das Beschichten von Bauteilen, insbesondere von Bauteilen einer Gasturbine, über Kalt-Kinetisches-Kompaktieren bzw. kinetisches Kaltgasspritzen.

Beim Kalt-Kinetischen-Kompaktieren bzw. kinetischen Kaltgasspritzen werden Partikel eines Beschichtungswerkstoffs zur Ausbildung der Beschichtung auf das Bauteil mit Hilfe eines Trägergases aufgebracht, nämlich auf eine zu beschichtende Oberfläche des Bauteils.

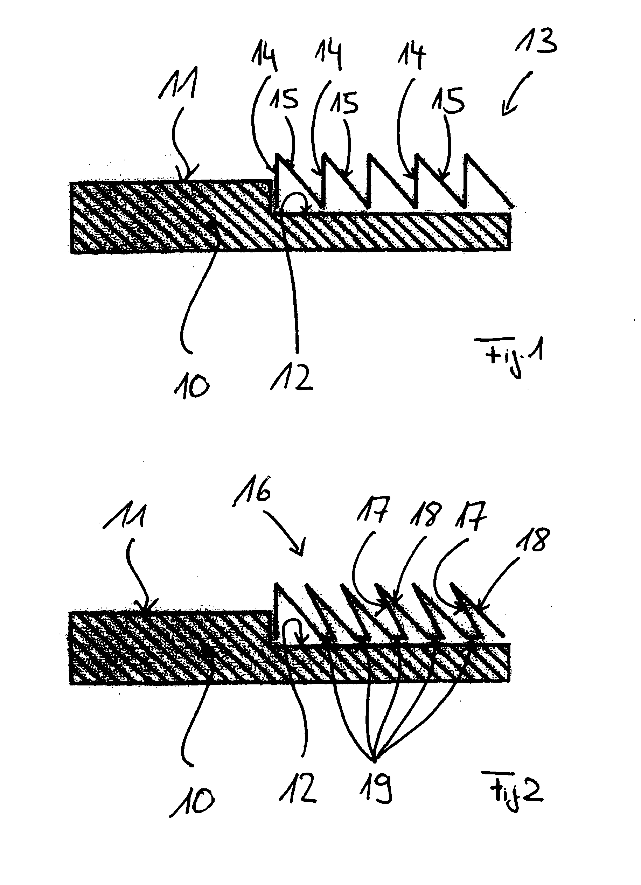

Fig. 1 zeigt stark schematisiert ein über Kalt-Kinetisches-Kompaktieren bzw. kinetisches Kaltgasspritzen zu beschichtendes Bauteil 10, wobei das zu beschichtende Bauteil 10 in einen ersten Bereich 11 einer Oberfläche beschichtet und in einem zweiten Bereich 12 der Oberfläche nicht beschichtet werden soll.

Der nicht zu beschichtende Bereich 12 der Oberfläche des Bauteils 10 ist mit einer erfindungsgemäßen Abdeckvorrichtung 13 abdeckbar, wobei die erfindungsgemäße Abdeckvorrichtung 13 derart profiliert ist, dass dieselbe mit dem von derselben abzudeckenden und damit dem nicht zu beschichtenden Bereich 12 der Oberfläche des Bauteils einen derart spitzen Winkel einschließt, dass Partikel eines Beschichtungswerkstoffs vom Bauteil 10 ablenkbar sind, sodass die Partikel an der Abdeckvorrichtung 13 nicht anhaften.

Gemäß Fig. 1 ist die Abdeckvorrichtung 13 hierzu zickzackförmig profiliert, wobei erste Abschnitte 14 mit dem nicht zu beschichtenden Bereich 12 der Oberfläche des Bauteils 10 einen rechten Winkel einschließen, und wobei zweite Abschnitte 15 der Abdeckvorrichtung 13, die jeweils zwischen zwei benachbarten ersten Abschnitten 14 positioniert sind, einen kleineren Winkel mit dem nicht zu beschichtenden Bereich 12 der Oberfläche des Bauteils 11 einschließen, der jedoch mindestens 30° beträgt. Hierdurch kann gewährleistet werden, dass Partikel eines Beschichtungswerkstoffs, die im rechten Winkel auf die Oberfläche des Bauteils 10 gerichtet werden, von den zweiten Abschnitten 15 der erfindungsgemäßen Abdeckeinrichtung 13 abprallen und so vom Bauteil 10 abgelenkt werden. Hierdurch werden weder der nicht zu beschichtende Bereich 12 der Oberfläche des Bauteils 11 noch die Abdeckvorrichtung 13 beschichtet, sodass dieselbe beliebig häufig verwendet werden kann.

Um Beschädigungen der Abdeckeinrichtung 13 durch die hohe Partikelgeschwindigkeit beim Kalt-Kinetischen-Kompaktieren zu vermeiden, ist dieselbe aus einem harten Werkstoff gefertigt, so z. B. aus einem metallischen Werkstoff oder aus einem Hartkunststoff.

Fig. 2 zeigt das zu beschichtende Bauteil 10 mit einer Abdeckvorrichtung 16 nach einem zweiten Ausführungsbeispiel der hier vorliegenden Erfindung, wobei die Abdeckvorrichtung 16 ebenso wie die Abdeckvorrichtung 13 wiederum zickzackförmig profiliert ist. Bei der Abdeckvorrichtung 16 der Fig. 2 verfügt dieselbe über erste Abschnitte 17, die mit dem nicht zu beschichtenden Bereich 12 der Oberfläche des Bauteils einen Winkel zwischen 30° und 90° einschließen. Zweite Abschnitte 18, die zwischen jeweils zwei benachbarten ersten Abschnitten 17 der Abdeckvorrichtung 13 positioniert sind, schließen mit dem nicht zu beschichtenden Bereich 12 der Oberfläche des Bauteils 10 einen kleineren Winkel ein, nämlich einen Winkel von mindestens 30°.

Hierdurch kann gewährleistet werden, dass Senken 19 der erfindungsgemäßen Abdeckeinrichtung 13, die zwischen den ersten Abschnitten 17 und den zweiten Abschnitten 18 derselben ausgebildet sind, in Transportrichtung des Beschichtungswerkstoffs beim Kalt-Kinetischen-Kompaktieren vollständig abgedeckt sind, sodass keinerlei Partikel des Beschichtungswerkstoffs in den Bereich der Senke 19 gelangen können. Die Senken 19 stehen demnach in einem Spritzschatten beim Kalt-Kinetischen-Kompaktieren, sodass keinerlei Gefahr besteht, dass die Senken 19 der Abdeckvorrichtung 16 beschichtet werden.

## Patentansprüche

1. Abdeckvorrichtung (13) für das Beschichten von Bauteilen durch Kalt-Kinetisches-Kompaktieren bzw. kinetisches Kaltgasspritzen, mit Hilfe derer ein nicht zu beschichtender Bereich (12) der Oberfläche eines zu beschichtenden Bauteils (10) abdeckbar ist, **dadurch gekennzeichnet, dass**
dieselbe derart profiliert ist, dass Abschnitte der Abdeckvorrichtung mit dem von derselben abzudeckenden und damit dem nicht zu beschichtenden Bereich (12) der Oberfläche einen derart spitzen Winkel einschließen dass Partikel eines Beschichtungswerkstoffs für Kalt-Kinetisches Kompaktieren bzw. Kinetisches Kaltgasspritzen während der Beschichtung von den Abschnitten abgelenkt werden, sodass die Partikel an der Abdeckvorrichtung nicht anhaften.

2. Abdeckvorrichtung nach Anspruch 1,
**dadurch gekennzeichnet, dass**
dieselbe zickzackförmig profiliert ist.

3. Abdeckvorrichtung nach Anspruch 1 oder 2,
**dadurch gekennzeichnet, dass**
erste Abschnitte (14) der Abdeckvorrichtung (13) mit dem nicht zu beschichtenden Bereich der Oberfläche eine rechten Winkel einschließen, und dass zweite Abschnitte (15) der Abdeckvorrichtung, die jeweils zwischen zwei ersten Abschnitten (14) positioniert sind, einen kleineren Winkel von mindestens 30° einschließen.

4. Abdeckvorrichtung nach Anspruch 1 oder 2,
**dadurch gekennzeichnet, dass**
erste Abschnitte (17) der Abdeckvorrichtung (16) mit dem nicht zu beschichtenden Bereich der Oberfläche einen Winkel zwischen 30° und 90° einschließen, und dass zweite Abschnitte (18) der Abdeckvorrichtung, die jeweils zwischen zwei ersten Abschnitten (17) positioniert sind, einen kleineren Winkel von mindestens 30° einschließen.

5. Abdeckvorrichtung nach Anspruch 4,
**dadurch gekennzeichnet, dass**
zwischen den ersten Abschnitten (17) und den zweiten Abschnitten (18) ausgebildete Senken (19) abgedeckt sind, sodass keine Partikel des Beschichtungswerkstoffs auf dieselben gelangen.

6. Abdeckvorrichtung nach einem der Ansprüche 1 bis 5,
**dadurch gekennzeichnet, dass**
dieselbe aus einem metallischen Werkstoff gebildet ist.

7. Abdeckvorrichtung nach einem der Ansprüche 1 bis 5,
**dadurch gekennzeichnet, dass**
dieselbe aus einem Hartkunststoff gebildet ist.

8. Verfahren zum Beschichten von Bauteilen einer Turbomaschine, insbesondere einer Gasturbine, wobei ein Beschichtungswerkstoff zur Ausbildung der Beschichtung über Kalt-Kinetisches-Kompaktieren bzw. kinetisches Kaltgasspritzen auf eine Oberfläche des Bauteils aufgebracht wird, **dadurch gekennzeichnet, dass** ein nicht zu beschichtender Bereich der Oberfläche mit einer Abdeckvorrichtung (13; 16) nach einem der Ansprüche 1 bis 7 abgedeckt wird.

## Claims

1. A covering device (13) for the coating of components by means of cold kinetic compacting or kinetic cold gas spraying, with the aid of which a region (12) that is not to be coated of the surface of a component (10) that is to be coated can be covered,
**characterised in that**
the covering device is profiled in such a way that sections of it enclose such an acute angle with the region (12) of the surface that is to be covered by it, and thus with the region (12) of the surface that is not to be coated, that particles of a coating material for cold kinetic compacting or kinetic cold gas spraying are deflected during the coating of the sections so that the particles do not adhere to the covering device.

2. A covering device according to claim 1,
**characterised in that**
it is profiled in a zigzag shape.

3. A covering device according to claim 1 or 2, **characterised in that**
first sections (14) of the covering device (13) enclose a right angle with the region of the surface that is not to be coated, and **in that** second sections (15) of the covering device, in each case positioned between two first sections (14), enclose a smaller angle of at least 30°.

4. A covering device according to claim 1 or 2, **characterised in that**
first sections (17) of the covering device (16) enclose an angle between 30° and 90° with the region of the surface that is not to be coated, and **in that** second sections (18) of the covering device, in each case positioned between two first sections (17), enclose a smaller angle of at least 30°.

5. A covering device according to claim 4, **characterised in that**
depressions (19) that are formed between the first sections (17) and the second sections (18) are covered so that no particles of the coating material reach them.

6. A covering device according to one of claims 1 to 5, **characterised in that**
it is formed from a metallic material.

7. A covering device according to one of claims 1 to 5, **characterised in that**
it is formed from a hard plastics material.

8. A method for coating components of a turbomachine, in particular a gas turbine, wherein a coating material for the formation of the coating is applied to a surface of the component by way of cold kinetic compacting or kinetic cold gas spraying, **characterised in that**
a region of the surface that is not to be coated is covered with a covering device (13; 16) according to one of claims 1 to 7.

## Revendications

1. Dispositif de masque (13) pour le revêtement de composants par compactage cinétique à froid ou pulvérisation cinétique de gaz froid, lequel permet de recouvrir une zone (12) de la surface n'ayant pas à être revêtue d'un composant (10) devant être revêtu,
**caractérisé en ce que**
celui-ci est profilé de telle manière que des parties du dispositif de masque forment avec la zone à recouvrir par celui-ci, soit la zone (12) de surface n'ayant pas à être revêtue, un angle aigu tel que des particules d'un matériau de revêtement pour le compactage cinétique à froid ou pour la pulvérisation cinétique de gaz froid soient déviées desdites parties pendant le revêtement, empêchant ainsi les particules d'adhérer au dispositif de masque.

2. Dispositif de masque selon la revendication 1, **caractérisé en ce que**
celui-ci est profilé en zigzags.

3. Dispositif de masque selon la revendication 1 ou 2,
**caractérisé en ce que**
des premières parties (14) du dispositif de masque (13) forment un angle droit avec la zone de surface n'ayant pas à être revêtue, et **en ce que** des deuxièmes parties (15) du dispositif de masque, situées chacune entre deux premières parties (14), forment avec celle-ci un angle inférieur, d'au moins 30°.

4. Dispositif de masque selon la revendication 1 ou 2,
**caractérisé en ce que**
des premières parties (17) du dispositif de masque (16) forment un angle compris entre 30° et 90° avec la zone de surface n'ayant pas à être revêtue, et **en ce que** des deuxièmes parties (18) du dispositif de masque, situées chacune entre deux premières parties (17), forment avec celle-ci un angle inférieur, d'au moins 30°.

5. Dispositif de masque selon la revendication 4, **caractérisé en ce que**
des dépressions (19) formées entre les premières parties (17) et les deuxièmes parties (18) sont couvertes, si bien qu'aucune particule du matériau de revêtement ne parvient sur celles-ci.

6. Dispositif de masque selon l'une des revendications 1 à 5,
**caractérisé en ce que**
celui-ci est réalisé dans un matériau métallique.

7. Dispositif de masque selon l'une des revendications 1 à 5,
**caractérisé en ce que**
celui-ci est réalisé dans un matériau synthétique dur.

8. Procédé de revêtements de composants d'une turbomachine, en particulier d'une turbine à gaz, où un matériau de revêtement est appliqué par compactage cinétique à froid ou pulvérisation cinétique de gaz froid sur une surface du composant pour la réalisation du revêtement, **caractérisé en ce qu'**une une zone de la surface n'ayant pas à être revêtue est recouverte d'un dispositif de masque (13 ; 16) selon l'une des revendications 1 à 7.
